# FASCICULE DE BREVET EUROPEEN

(11) **EP 2 795 765 B1**
(45) Date de publication et mention de la délivrance du brevet: **10.02.2016**
(21) Numéro de dépôt: 12795523.5
(22) Date de dépôt: 13.11.2012
(51) Int. Cl.: H02K 3/38, H02K 3/34, H02K 3/52

(54) **ROTOR A POLES SAILLANTS COMPORTANT UN DISPOSITIF D'ISOLATION DE BOBINAGES ET DISPOSITIF D'ISOLATION DE BOBINAGES ASSOCIE**
SCHENKELPOLLÄUFER MIT EINER VORRICHTUNG ZUM ISOLIEREN DER WICKLUNGEN UND ZUGEHÖRIGE VORRICHTUNG ZUR ISOLIERUNG DER WICKLUNGEN
SALIENT POLE ROTOR COMPRISING A DEVICE FOR INSULATING WINDINGS AND ASSOCIATED DEVICE FOR INSULATING WINDINGS

(30) Priorité: 20.12.2011 FR 1161998
(43) Date de publication de la demande: 29.10.2014
(73) Titulaire: Valeo Equipements Electriques Moteur, 94046 Créteil Cedex (FR)
(72) Inventeur: BOUSSICOT, Frédéric, F-94000 Creteil (FR); LUTUN, Jérémie, F-94340 Joinville Le Pont (FR)
(74) Mandataire: Ribeil, Alexandre
(86) Numéro de dépôt international: PCT/FR2012/052602
(87) Numéro de publication internationale: WO 2013/093257

(56) Documents cités:
- EP-A1- 0 630 095
- CH-A- 409 104
- DE-A1- 3 216 117
- JP-A- 58 172 946
- US-A1- 2002 113 517

## Description

### DOMAINE TECHNIQUE DE L'INVENTION

L'invention concerne un rotor à pôles saillants comportant un dispositif d'isolation de bobinages ainsi que le dispositif d'isolation de bobinages associé.

L'invention trouve une application particulièrement avantageuse dans le domaine des machines électriques tournantes telles que les alternateurs, les alterno-démarreurs et les ralentisseurs.

### ETAT DE LA TECHNIQUE

Le document WO 2007/003835 présente un rotor à pôles saillants pour une machine électrique tournante notamment un alternateur ou un alterno-démarreur pour véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile.

Cette machine comporte essentiellement un carter et, à l'intérieur de celui-ci, un rotor solidaire en rotation d'un arbre central de rotor et un stator annulaire qui entoure le rotor de manière coaxiale à l'arbre.

Le stator comporte un corps en forme d'un paquet de tôles doté d'encoches, par exemple du type semi-fermé, pour le montage d'un bobinage de stator comportant plusieurs enroulements. Ce bobinage de stator comporte par exemple un jeu d'enroulements triphasé en étoile ou en triangle, dont les sorties sont reliées à un pont redresseur comportant des éléments redresseurs.

D'une manière générale, l'alternateur est du type polyphasé et le ou les ponts redresseurs permettent notamment de redresser le courant alternatif produit dans les enroulements du stator en un courant continu notamment pour charger la batterie du véhicule automobile et alimenter les charges et les consommateurs électriques du réseau de bord du véhicule automobile.

Le carter est en au moins deux parties, à savoir un palier avant et un palier arrière. Les paliers sont de forme creuse et portent chacun centralement un roulement à billes respectivement pour le montage à rotation de l'arbre du rotor.

Le carter comporte une partie intermédiaire portant intérieurement le corps du stator. Cette partie intermédiaire est intercalée axialement entre les paliers dotés chacun d'une pluralité d'ouvertures pour ventilation interne de la machine grâce à au moins un ventilateur solidaire d'une des extrémités axiale du rotor. Ce ventilateur comporte des pales solidaires d'un flasque de manière décrite ci-dessous.

L'arbre du rotor porte à son extrémité avant une poulie qui est agencée à l'extérieur du carter. La poulie appartient à un dispositif de transmission de mouvements par l'intermédiaire d'au moins une courroie entre l'alternateur et le moteur thermique du véhicule automobile.

Un paquet de tôles est monté coaxialement sur l'arbre de rotor dans le carter, à l'intérieur du stator. Ce paquet de tôles est formé d'un empilement axial de tôles qui s'étendent dans un plan radial perpendiculaire à l'axe de l'arbre de rotor. Ce paquet de tôles comporte ici, une âme centrale cylindrique et une répartition circonférentielle de bras saillants radialement à partir de l'âme.

Dans un plan radial, les tôles du paquet de tôles ont toutes un contour identique. Le contour des tôles est découpé de forme globalement circulaire et comportant des pôles saillants, qui sont répartis régulièrement selon une direction radiale et saillants de l'arbre vers la périphérie externe. Le paquet de tôles comporte au moins deux pôles.

Chaque pôle est constitué d'un bras qui, à partir de l'âme, s'étend radialement vers la périphérie extérieure en direction du stator. L'extrémité libre du pôle se termine par un retour saillant circonférentiellement de part et d'autre du bras. Un entrefer annulaire existe entre l'extrémité libre des pôles et la périphérie intérieure du corps du stator.

La fonction du retour saillant de chaque pôle est de retenir dans la direction radiale un bobinage d'excitation électriquement conducteur, qui est enroulé autour du bras radial de chaque pôle, à l'encontre de la force centrifuge subie par le bobinage d'excitation lors de la rotation du rotor.

Les bobinages d'excitation de chaque pôle sont reliés électriquement entre eux par des fils de liaison, par exemple en série. Les bobinages d'excitation sont alimentés électriquement par un collecteur, qui comporte des bagues collectrices, qui sont agencées autour d'une extrémité arrière de l'arbre. Ce collecteur est par exemple réalisé par surmoulage de matière électriquement isolante sur des éléments électriquement conducteurs reliant les bagues à un anneau relié électriquement par des liaisons filaires aux extrémités du ou des bobinages d'excitation du rotor.

Les bagues collectrices sont alimentées électriquement par l'intermédiaire de balais qui appartiennent à un porte-balais et qui sont disposés de façon à frotter sur les bagues collectrices. Le porte-balais est généralement agencé dans le carter et il est relié électriquement à un régulateur de tension.

Chaque bobinage d'excitation est enroulé autour du bras d'orientation radiale de chaque pôle de manière que des portions d'extrémités axiales du bobinage d'excitation font saillie axialement par rapport à chaque face radiale d'extrémité axiale externe du paquet de tôles. Ces portions en saillie seront par la suite appelées "chignons". Chaque pôle comporte ainsi un bobinage d'excitation qui comporte lui-même deux chignons opposés.

Un premier flasque avant et un deuxième flasque arrière sont montés coaxialement à l'arbre de manière à enserrer axialement le paquet de tôles pour maintenir les tôles empilées en paquet. Chaque flasque a globalement la forme d'un disque s'étendant dans un plan radial perpendiculaire à l'axe de l'arbre. Chaque flasque comporte un orifice central pour le montage coaxial sur l'arbre.

Les flasques sont agencés axialement de part et d'autre du paquet de tôles de manière que les faces radiales internes des flasques sont en appui contre les faces radiales d'extrémité axiales externes du paquet de tôles. Chaque flasque comporte quatre trous destinés à permettre le passage de quatre tirants. Les bras du paquet de tôles comportent des trous de manière que les tirants puissent traverser axialement le paquet de tôles depuis le flasque avant jusqu'au flasque arrière. Les flasques sont en matière conductrice de chaleur, par exemple en métal.

Le bord périphérique externe des flasques en vis-à-vis du stator comporte des rainures axiales qui sont débouchantes dans les faces radiales interne et externe des flasques. Ces rainures permettent de renouveler l'air qui est compris radialement entre le stator et le rotor. Chaque flasque comporte aussi des logements qui sont réalisés dans leur face radiale interne. Ces logements sont destinés à recevoir les chignons saillants. Au moins un des logements d'au moins un flasque comporte une surface de contact avec la face radiale externe du chignon associé. Ainsi, lorsque les chignons sont échauffés, leur chaleur est transmise aux flasques notamment par conduction.

Pour éviter que le bobinage d'excitation ne soit abîmé et pour éviter les courts-circuits dans le bobinage d'excitation, le chignon est en contact avec le fond du logement par l'intermédiaire d'une substance conductrice de chaleur et non conductrice d'électricité, qui protège les fils du bobinage d'excitation. La substance est ici un vernis d'imprégnation conducteur de chaleur et isolant électrique. Ce verni durcit par polymérisation.

L'un des flasques comporte des orifices de remplissage qui débouchent chacun dans le fond d'un logement associé. Ces orifices de remplissage sont destinés à permettre l'imprégnation du vernis liquide autour du bobinage d'excitation associé audit logement, et plus particulièrement autour des deux chignons du bobinage d'excitation.

La face radiale externe de chaque flasque comporte des pales formant un ventilateur. Chaque pale s'étend axialement vers l'extérieur depuis la face radiale externe du flasque associé. Lorsque le rotor tourne, les pales permettent ainsi d'évacuer la chaleur emmagasinée notamment dans les flasques et le rotor par circulation d'air à l'intérieur de la machine par l'intermédiaire des ouvertures que présentent les paliers.

Cependant, pour assurer l'isolation des bobinages, une telle configuration du rotor impose nécessairement de mettre en oeuvre une opération d'imprégnation de vernis longue et coûteuse à réaliser.

### OBJET DE L'INVENTION

L'invention a notamment pour but de proposer un perfectionnement au rotor à pôles saillants de l'état de la technique en faisant appel à un dispositif d'isolation de bobinages permettant d'assurer l'isolation des bobinages sans avoir à réaliser une étape d'imprégnation de vernis desdits bobinages.

A cette fin, l'invention concerne un rotor de machine électrique tournante comportant :
- un arbre de rotor destiné à être monté rotatif autour de son axe,
- un paquet de tôles monté coaxialement sur l'arbre de rotor, ce paquet de tôles comportant au moins deux pôles saillants radialement,
- un bobinage d'excitation enroulé autour de chaque pôle, de manière que des portions d'extrémité axiale du bobinage, dîtes « chignons » font saillie axialement par rapport à chaque face d'extrémité radiale externe du paquet de tôles,
- un premier et un deuxième flasque de maintien du paquet de tôles et des chignons des bobinages agencés axialement de part et d'autre du paquet de tôles,
- caractérisé en ce qu'il comporte en outre
- un dispositif d'isolation de bobinages d'excitation comportant :
   - un premier élément isolant positionné entre le premier flasque et la première face d'extrémité radiale externe du paquet de tôles,
   - un deuxième élément isolant positionné entre le deuxième flasque et la deuxième face d'extrémité radiale externe du paquet de tôles,
   - le premier et deuxième élément isolant assurant l'isolation des chignons,
   - au moins deux isolants d'encoche, prenant la forme d'une membrane pliée, chaque isolant d'encoche étant positionné sur les faces de deux pôles saillants successifs en regard l'un de l'autre.

Selon une réalisation, les éléments isolants comportent une paroi radiale munie d'une ouverture principale autorisant le passage de l'arbre.

Selon une réalisation, les éléments isolants comportent au moins deux bras agencés régulièrement autour du bord externe de la paroi radiale, ces bras étant maintenus plaqués contre une face d'extrémité radiale d'un pôle saillant par un chignon.

Selon une réalisation, chaque bras des éléments isolants comporte à son extrémité libre une casquette s'étendant circonférentiellement de part et d'autre du bras, ces casquettes étant positionnées entre chignon et le rebord annulaire d'un flasque solidaire du paquet de tôles.

Selon une réalisation, les éléments isolants comportent des pions positionnés sur la face externe de la paroi radiale des éléments isolant, ces pions assurant via au moins une de leurs faces latérales le guidage des fils des bobinages.

Selon une réalisation, les éléments isolant comportent au moins deux dispositifs d'encliquetage destinés à coopérer par encliquetage avec des ouvertures ménagées sur chaque face d'extrémité radiale du paquet de tôles.

Selon une réalisation, les isolants d'encoche sont plus minces que le premier et les deuxièmes éléments isolants.

Selon une réalisation, un des éléments isolants est obtenu par surmoulage avec les isolants d'encoche, de sorte que cet élément isolant et les isolants d'encoche forment une seule pièce.

Selon une réalisation, les bras des éléments isolants comportent des rainures assurant le maintien des spires des bobinages.

Selon une réalisation, les rainures des bras du premier élément isolant sont inclinées.

Selon une réalisation, les isolants d'encoche sont réalisés en matériau électriquement isolant et conducteur de chaleur, par exemple en matériau aramide de type dit Nomex (marque déposée).

L'invention concerne en outre un dispositif d'isolation de bobinages d'excitation d'un rotor appartenant à une machine électrique tournante selon l'une des revendications précédentes, caractérisé en ce qu'il comporte :
- un premier élément isolant destiné à être positionné entre un premier flasque et une première face d'extrémité radiale externe d'un paquet de tôles du rotor,
- un deuxième élément isolant destiné à être positionné entre un deuxième flasque et une deuxième face d'extrémité radiale externe du paquet de tôles,
- les éléments isolants assurant l'isolation de chignons des bobinages, et
- au moins deux isolants d'encoche, prenant la forme d'une membrane fine pliée, chaque isolant d'encoche étant positionné sur des faces de deux pôles saillants successifs du rotor en regard l'un de l'autre.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une vue en coupe axiale d'une machine électrique tournante munie d'un rotor selon l'invention ;
Figure 2 : une vue en perspective éclatée d'un rotor selon l'invention qui n'est pas bobiné ;
Figures 3a et 3b : des vues en perspective d'un rotor bobiné selon l'invention sans les flasques ni le résolveur ;
Figures 4a et 4b : des vues respectivement du dessus et du dessous d'un rotor selon l'invention sans les flasques ni le résolveur ;
Figures 5a-5b : des vues en perspective d'un rotor bobiné selon l'invention muni de ses flasques de maintien ;
Figures 6a-6b : des vues respectivement du dessus et du dessous d'un rotor selon l'invention muni de ses flasques de maintien ;
Figure 7 : une vue en coupe d'un rotor selon l'invention présentant une variante d'ouverture pour sa fixation sur l'arbre.

Les éléments identiques, similaires ou analogues conservent la même référence d'une figure à l'autre.

### DESCRIPTION D'EXEMPLES DE REALISATION DE L'INVENTION

L'invention concerne un rotor 30 à pôles saillants pour une machine 10 électrique tournante notamment un alternateur ou un alterno-démarreur. Cette machine 10 est de préférence destinée à être mise en oeuvre dans un véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile. Un tel alterno-démarreur est décrit par exemple dans le document WO-A-01/69762 auquel on se reportera pour plus de précisions.

Cette machine comporte essentiellement un carter 11 et, à l'intérieur de celui-ci, un rotor 30 solidaire en rotation d'un arbre 35 central de rotor et un stator 12 annulaire qui entoure le rotor 30 de manière coaxiale à l'arbre 35 d'axe B constituant également l'axe du rotor 30.

Le stator 12 comporte un corps en forme d'un paquet de tôles doté d'encoches, par exemple du type semi-fermé, pour le montage d'un bobinage de stator 13 comportant plusieurs enroulements. Ce bobinage de stator 13 comporte par exemple un jeu d'enroulements triphasé en étoile ou en triangle, dont les sorties sont reliées à un pont redresseur (non représenté) comportant des éléments redresseurs comportant des éléments redresseurs tels que des diodes ou des transistors du type MOSFET, notamment lorsque la machine 10 est du type réversible et consiste en un alterno-démarreur comme décrit par exemple dans le document FR-A-2.745.445 (US-A-6.002.219).

Les enroulements du bobinage de stator 13 sont obtenus à l'aide d'un fil continu, électriquement conducteur, revêtu d'une couche isolante et monté dans les encoches concernées du corps du stator 12.

Selon une variante non représentée, pour un meilleur remplissage des encoches du corps du stator 12, les enroulements 13 sont réalisés à l'aide de conducteurs en forme de barres, tel que des épingles, reliées entre elles par exemple par soudage.

Selon une autre variante non représentée, pour réduire le taux d'ondulation et les bruits magnétiques, le bobinage de stator 13 comporte deux jeux d'enroulements triphasés pour former un dispositif d'enroulements composites de stator 12, les enroulements étant décalés de trente degrés électriques comme décrit par exemple dans les documents US-A1-2002/0175589, EP-0.454.039 et FR-A-2.784.248. Dans ce cas il est prévu deux ponts redresseurs et toutes les combinaisons d'enroulements triphasés en étoile et/ou en triangle sont possibles.

D'une manière générale, l'alternateur est du type polyphasé et le pont redresseur permet notamment de redresser le courant alternatif produit dans les enroulements du stator 12 en un courant continu notamment pour charger la batterie (non représentée) du véhicule automobile et alimenter les charges et les consommateurs électriques du réseau de bord du véhicule automobile.

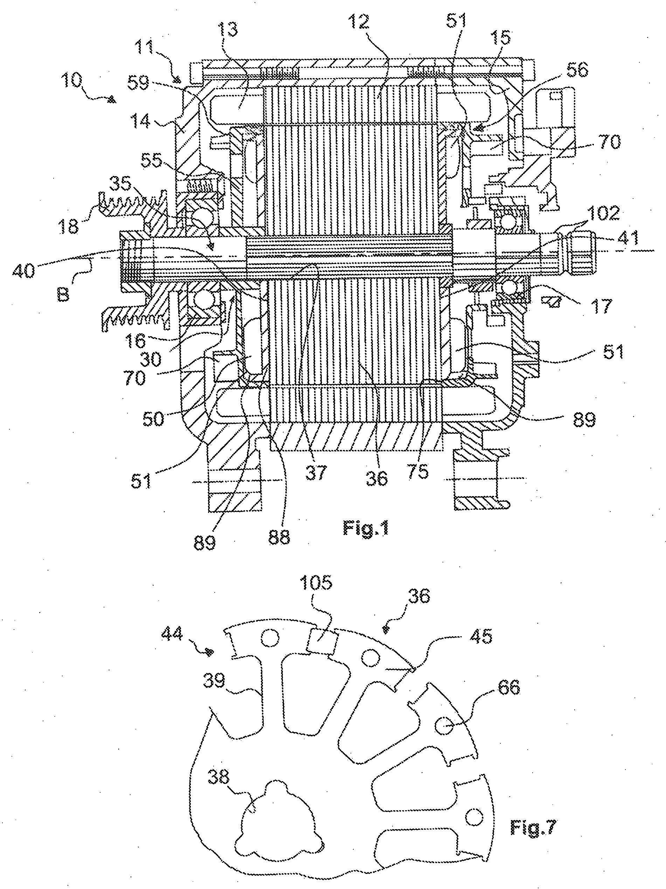

Comme illustré à la Figure 1, l'arbre 35 du rotor 30 est monté à rotation autour de son axe B d'orientation axiale dans le stator 12 de la machine 10.

Le carter 11 est en au moins deux parties, à savoir un palier 14 avant et un palier 15 arrière. Les paliers 14, 15 sont de forme creuse et portent chacun centralement un roulement à billes respectivement 16 et 17 pour le montage à rotation de l'arbre 35 du rotor 30.

Le carter 11 comporte une partie intermédiaire (non référencée) portant intérieurement le corps du stator. Cette partie intermédiaire est intercalée axialement entre les paliers 14, 15 dotés chacun d'une pluralité d'ouvertures, dont l'une (non référencée) est visible à la figure 1, pour ventilation interne de la machine à l'aide d'un ventilateur décrit plus en détails ci-après.

L'arbre 35 du rotor 30 porte à son extrémité avant une poulie 18 qui est agencée à l'extérieur du carter 11. La poulie 18 appartient à un dispositif de transmission de mouvements par l'intermédiaire d'au moins une courroie (non représentée) entre l'alternateur et le moteur thermique du véhicule automobile.

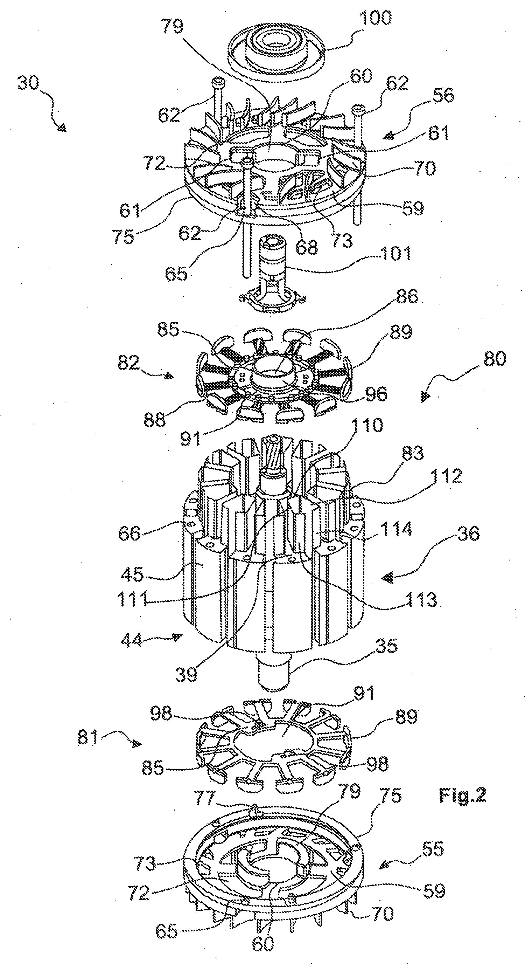

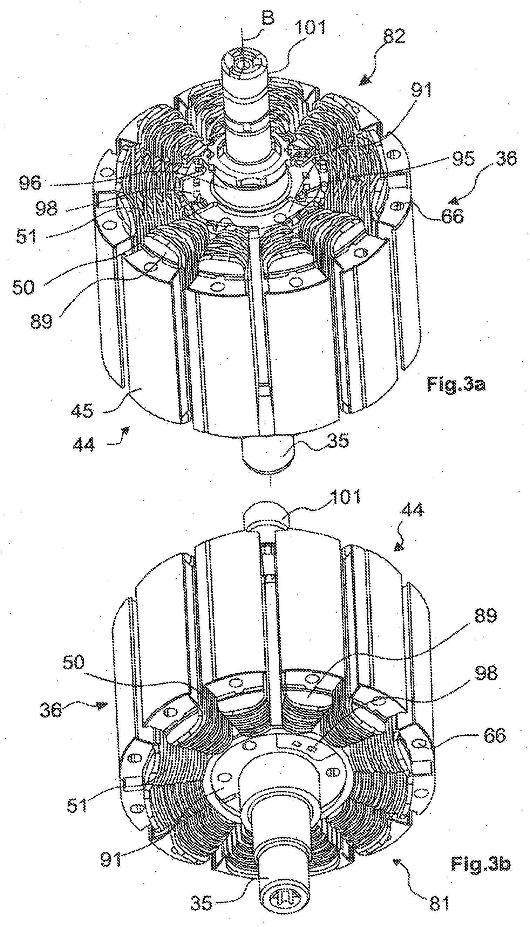

La Figure 2 montre le rotor 30 comportant l'arbre 35, un paquet 36 de tôles monté coaxialement sur l'arbre 35, ce paquet 36 de tôles comportant au moins deux pôles 44 saillants radialement. Le rotor 30 comporte en outre un bobinage 50 d'excitation (cf. Figures 3a-3b) enroulé autour de chaque pôle 44, de manière que des portions 51 d'extrémité axiale du bobinage 50, dîtes « chignons » font saillie axialement par rapport à chaque face 40, 41 d'extrémité radiale externe du paquet 36 de tôles. Des flasques 55, 56 de maintien du paquet 36 de tôles et des chignons 51 des bobinages 50 sont agencés axialement de part et d'autre du paquet 36 de tôles.

Plus précisément, le paquet 36 de tôles est monté coaxialement sur l'arbre 35 de rotor 30 dans le carter 11, à l'intérieur du stator 12. Le paquet 36 de tôles est monté solidaire en rotation de l'arbre 35. A cet effet, le paquet 36 de tôles comporte un orifice 37 axial central qui est emmanché à force sur un tronçon moleté de l'arbre 35. En variante, l'âme du paquet 36 de tôles présente une ouverture 38 munie d'évidements répartis de manière régulière circonférenciellement autour de l'ouverture 38 destinés à coopérer avec des languettes de forme correspondante appartenant à l'arbre 35 (cf. Figure 7). Dans un exemple de réalisation, ces évidements présentent en vue de dessus une forme circulaire.

Le paquet 36 de tôles est formé d'un empilement axial de tôles qui s'étendent dans un plan radial perpendiculaire à l'axe B de l'arbre 35. Le paquet 36 de tôles forme le corps du rotor 30 et est en matière ferromagnétique. Ce paquet 36 de tôles comporte ici une âme centrale cylindrique et des pôles 44 saillants radialement à partir de l'âme. Ces pôles 44 sont dans un mode de réalisation d'un seul tenant avec l'âme. En variante les pôles 44 sont rapportés sur l'âme, par exemple par une liaison du type tenons-mortaises comme décrit dans le document FR 2 856 532. Un pôle 44 sur deux ou tous les pôles 44 sont rapportés sur l'âme de manière à faciliter le montage et le démontage des pôles 44. En variante, un retour 45 saillant d'un pôle 44 sur deux ou le retour 45 saillant de tous les pôles 44 est rapporté par rapport à un bras 39 correspondant.

Dans la suite de la description, des faces radiales orientées vers le milieu du paquet 36 de tôles seront qualifiées de faces internes tandis que les faces radiales orientées dans un sens opposé seront qualifiées de faces externes. On considère également que le côté arrière du rotor 30 est situé du côté du résolveur 100 tandis que le côté avant est situé du côté opposé.

Ainsi, le paquet 36 de tôles est délimité axialement par la première face 40 radiale externe d'extrémité avant et par la deuxième face 41 radiale externe opposée d'extrémité arrière.

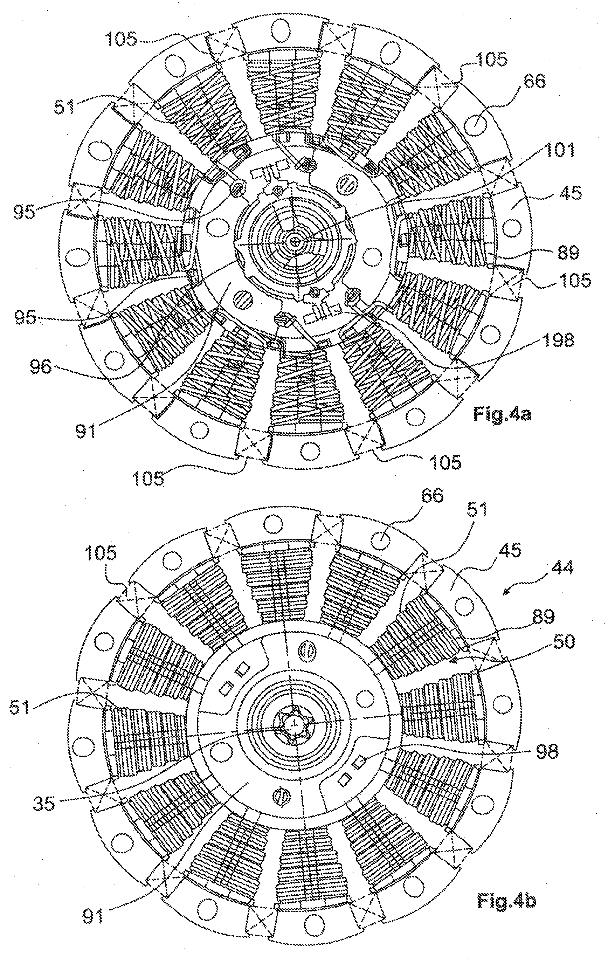

Dans un plan radial, les tôles du paquet 36 de tôles ont toutes un contour identique. Le contour des tôles est découpé de forme globalement circulaire et comporte les pôles 44 saillants, qui sont répartis régulièrement selon une direction radiale et saillants de l'arbre 35 vers la périphérie externe, comme illustré aux Figures 4a-4b. Le paquet 36 de tôles comporte au moins deux pôles 44 et dans l'exemple représenté aux Figures, il comporte douze pôles 44.

Chaque pôle 44, comme mieux visible à la figure 7, est constitué d'un bras 39 et d'un retour 45 saillant. Le bras 39 s'étend radialement depuis l'âme vers la périphérie extérieure en direction du stator 12. L'extrémité libre du pôle 44 se termine par le retour 45 saillant circonférentiellement de part et d'autre du bras 39. Un entrefer annulaire existe entre l'extrémité libre des pôles 44 et la périphérie intérieure du corps du stator 12.

La fonction du retour 45 saillant de chaque pôle 44 est de retenir dans la direction radiale un bobinage 50 d'excitation électriquement conducteur, qui est enroulé autour du bras 39 radial de chaque pôle 44 comme cela est décrit ci-dessous, à rencontre de la force centrifuge subie par le bobinage 50 d'excitation lors de la rotation du rotor 30.

Les bobinages 50 d'excitation de chaque pôle 44 sont reliés électriquement entre eux par des fils de liaison, par exemple en série en variante en parallèle. Les fils de liaison et du bobinage pourront être en cuivre recouvert d'émail. Les bobinages 50 d'excitation sont alimentés électriquement par un collecteur 101, qui comporte des bagues collectrices 102, qui sont agencées autour d'une extrémité arrière de l'arbre 35. Ce collecteur 101 est par exemple réalisé par surmoulage de matière électriquement isolante sur des éléments électriquement conducteurs (non visibles) reliant les bagues 102 à un anneau (non référencé) relié électriquement par des liaisons filaires aux extrémités du ou des bobinages 50 d'excitation du rotor 30.

Les bagues collectrices 102 sont alimentées électriquement par l'intermédiaire de balais (non représentés) qui appartiennent à un porte-balais et qui sont disposés de façon à frotter sur les bagues collectrices 102. Le porte-balais est généralement agencé dans le carter 11 et il est relié électriquement à un régulateur de tension (cf. Figure 1).

Avantageusement, pour augmentation de la puissance de la machine 10 électrique tournante, le rotor 30 comporte en outre des aimants référencés 105 sur les Figures 4a-4b suivant un nombre égal au nombre de pôles (en l'occurrence douze). Les aimants 105 s'étendent axialement au voisinage de la périphérie externe du rotor 30 entre deux retours 45. Ainsi les aimants 105 sont agencés régulièrement autour de l'arbre 35 en alternance avec les pôles 44. A cet effet, chaque aimant 105 est positionné entre deux pôles 44 saillants adjacents, les extrémités libres des deux pôles 44 saillants étant munies d'encoches maintenant l'aimant 105 de manière immobile entre les deux pôles. Une même encoche peut contenir un seul ou une pluralité d'aimants 105, par exemple deux aimants 105 dont un en terre rare et un en ferrite.

Le rotor 30 comporte au moins deux pôles 44 diamétralement opposés. Aux Figures 4a-4b il est prévu une alternance circonférentielle de douze pôles 44 et de douze aimants 105. Le nombre de pôles 44 et le nombre d'aimant 105 sont variables suivant l'application. On peut prévoir un mode de réalisation sans aimants 105. Dans un autre mode de réalisation le nombre d'aimants 105 est inférieur au nombre de pôles 44. Par simplicité, à titre non limitatif, on supposera dans la suite qu'il est prévu douze pôles 44 diamétralement opposés, douze bobinages 50 et douze aimants 105. Les pôles 44 et les aimants 105 sont répartis ici circonférentiellement de manière régulière. Le montage des aimants 105 dans les encoches, ici en forme de rainures, des retours 45 pourra être réalisé à l'aide d'une lame et de colle comme dans le document FR 2784 248 auquel on se reportera.

D'une manière générale un faible jeu, appelé entrefer, existe entre la périphérie externe des pôles 44 et la périphérie interne du corps du stator 12.

Le rotor 30 comporte en outre un dispositif 80 d'isolation électrique des bobinages 50 par rapport au paquet de tôles 36. Ce dispositif 80 comporte deux éléments 81, 82 isolants. Le premier élément 81 isolant, dit élément 81 avant, est positionné contre la face 40 radiale externe du paquet 36 de tôles, tandis que le deuxième élément 82 isolant, dit élément 82 arrière, est positionné contre la face 41 radiale externe du paquet 36 de tôles. Ces éléments 81, 82 isolants assurent l'isolation électrique des chignons 51 des bobinages 50. Le dispositif 80 d'isolation de bobinages comporte en outre des isolants 83 d'encoche assurant l'isolation électrique des parties axiales des bobinages 50.

Plus précisément, chaque élément 81, 82 isolant comporte une paroi 85 radiale centrale munie d'une ouverture 86 principale autorisant le passage de l'arbre 35. Chaque élément 81, 82 comporte des bras 88 s'étendant radialement à partir du bord externe de paroi 85 radiale vers l'extérieur de chaque élément 81, 82. Chacun de ces bras 88 comporte à son extrémité libre une casquette 89 s'étendant circonférentiellement de part et d'autre du bras 88. La casquette 89 s'étend également axialement en direction opposée au paquet de tôles 36 et ce à la périphérie interne des retours 45.

Les bras 88 des éléments 81, 82 isolants présentent de préférence, sur leur face externe, des rainures assurant un maintien radial des spires des bobinages 50. Les rainures des bras 88 de l'élément 81 isolant avant sont inclinées afin de faciliter le changement de rang lors de l'opération de bobinage consistant à enrouler un fil conducteur autour des différents pôles pour obtenir les bobinages 50.

Des pions 95 de guidage sont positionnés sur une face externe de la paroi 85 radiale de l'élément 82. Ces pions 95 qui présentent des faces latérales sur lesquelles les fils prennent appui permettent ainsi de guider les fils lors de l'opération de bobinage des pôles 44. Ces pions 95 permettent également de maintenir en position les fils des bobinages 50 dans une position fixe une fois l'opération de bobinage terminée. Ces pions 95 de guidage sont répartis sur la face externe de la paroi 85 radiale de manière adaptée à la configuration de bobinage souhaitée.

Chaque paroi 85 radiale comporte en outre deux parties 91 évidées destinées à recevoir des secteurs internes 79 d'un des flasques 55, 56 de maintien. Pour l'élément 82 isolant arrière, les parties 91 évidées sont diamétralement opposées. Bien entendu, le nombre et la forme des parties 91 évidées, en particulier l'angle d'ouverture et l'écart annulaire entre deux parties 91 évidées, pourront être adaptés en fonction du nombre et de la forme des secteurs 79 correspondants. Pour l'élément 81 isolant avant, les parties 91 évidées et l'ouverture 86 principale sont reliées entre elles, les parois internes délimitant l'orifice étant destinées à prendre appui localement sur la circonférence externe de l'arbre 35.

L'élément isolant 82 arrière comporte un rebord 96 annulaire délimitant l'ouverture 86 principale. Ce rebord 96 annulaire s'étend axialement depuis la face externe de l'élément 82 isolant vers l'extérieur du rotor 30. Lorsque le rotor 30 est monté, le rebord 96 est situé entre le colleteur 101 et un épaulement de l'arbre 35 du rotor 30.

Les éléments 81, 82 isolants comportent chacun deux dispositifs 98 d'encliquetage (de clipsage) destinés à coopérer par encliquetage (clipsage) avec des ouvertures correspondantes ménagées sur chaque face d'extrémité radiale de l'âme du paquet 36 de tôles.

Les isolants 83 d'encoche prennent la forme d'une membrane fine, réalisée dans un matériau électriquement isolant et conducteur de chaleur, par exemple un matériau aramide de type dit Nomex (marque déposée), cette membrane fine étant pliée de manière que chaque isolant 83 d'encoche est plaqué contre les parois internes axiales du paquet 36 de tôles entre deux pôles 44 adjacents. A cet effet, l'isolant 83 d'encoche présente cinq parties 110-114, chaque partie 110-114 étant pliée par rapport à une partie adjacente suivant un segment de pliage sensiblement parallèle à l'axe B du rotor 30. Une première partie 110 située vers le centre du rotor 30 est plaquée contre une partie de la circonférence externe de l'âme située entre deux pôles 44 adjacents. Deux parties 111, 112 en regard une de l'autre sont plaquées contre deux faces tournées l'une vers l'autre des bras 39 des pôles 44. Deux parties 113, 114 sont plaquées contre deux portions de deux retours 45 saillants adjacents. Le nombre d'isolants 83 d'encoche dépend du nombre de pôles 44, auquel il est égal. Ici, le nombre d'isolants 83 d'encoche est de douze.

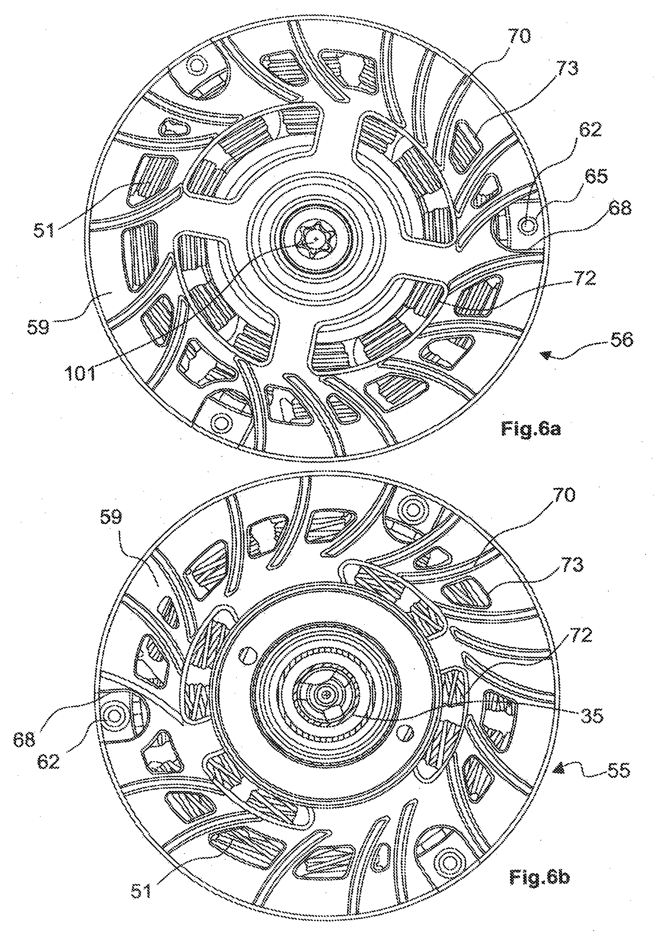

Chaque bobinage 50 d'excitation comporte des spires enroulées autour du bras 39 d'orientation radiale de chaque pôle 44 recouvert d'isolants 83 d'encoche et des deux bras 88 des éléments 81, 82 isolants situés chacun à une extrémité de ce pôle 44, de manière que les chignons 51 du bobinage 50 d'excitation font saillie axialement par rapport à chaque face 40, 41 d'extrémité radiale externe du paquet 36 de tôles, comme représenté aux Figures 3a-3b. Plus particulièrement, la face radiale externe de chaque chignon 51 est décalée axialement vers l'extérieur par rapport à la face 40, 41 radiale externe associée du paquet 36 de tôles. Chaque pôle 44 comporte ainsi un bobinage 50 d'excitation qui comporte lui-même deux chignons 51 opposés. Comme visible dans les figures 4a et 4b un espace interbobinage existe entre deux bobinages 50 adjacents. Cet espace interbobinage délimite un passage axial traversant le paquet de tôles 36. On notera que la largeur des chignons 51 et des bobinages 50 est décroissante par couche en allant radialement de la périphérie externe à la périphérie interne des chignons et des bobinages comme visible dans les Figures 6a, 6b.

Suivant ce bobinage, chaque chignon 51 est en appui contre la face de la casquette 89 tournée vers le chignon 51. La casquette 89 est maintenue immobile par rapport au pôle 44 grâce au bras 88 associé plaqué entre une face radiale du pôle 44 et les fils des bobinages 50. La casquette 89 en combinaison avec le rebord 75 du flasque permet ainsi de retenir les chignons 51 malgré la force centrifuge provoquée par la rotation du rotor 30 s'exerçant sur lesdits chignons 51.

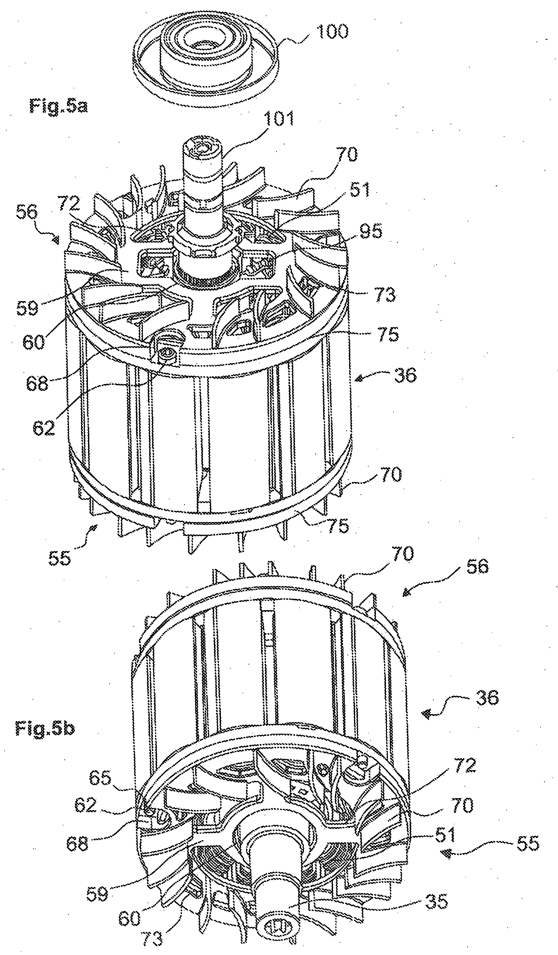

Le premier flasque 55 de maintien du paquet 36 de tôle, dit flasque 55 avant et le deuxième flasque 56 de maintien du paquet 36 de tôle, dit flasque 56 arrière, sont montés coaxialement à l'arbre 35 de manière à enserrer axialement les éléments 81, 82 isolants et le paquet 36 dé tôles (cf. Figures 5a-5b, 6a-6b). Ces flasques 55, 56 sont en matériau amagnétique en étant avantageusement métalliques pour mieux évacuer la chaleur.

Chaque flasque 55, 56 comporte une paroi 59 radiale s'étendant dans un plan radial perpendiculaire à l'axe B de l'arbre 35. Cette paroi 59 radiale est munie d'une ouverture 60 principale autorisant le passage de l'arbre 35. Le flasque 56 arrière comporte deux évidements 61 diamétralement opposés débouchant vers l'ouverture 60. Ces évidements 61 de forme sensiblement carrée vue du dessus permettent le passage d'une d'une patte (Dont l'une est référencée en 198 à la figure 4a) du collecteur 101 comme décrit dans le document FR 2 710 197 auquel on se reportera. Dans cette figure 4a les pattes 198 ne sont pas encore rabattues pour serrer les extrémités des fils de liaison des bobinages 50. Ces extrémités ont été coupées pour plus de clarté pour mieux montrer les pattes.

On notera que quatre des pions 95 internes d'extrémités sont décalés radialement par rapport aux autres pions 95 pour un montage en parallèles des bobinages 50. Plus précisément deux pions internes d'extrémité 95 sont disposés de part et d'autre de chaque patte 198. Dans cette Figure 4a on a coupé pour plus de clarté les extrémités des fils de liaison entre les bobinages 50. Ces extrémités sont enroulées autour des pions internes 95 et destinées à être fixés par sertissage dans les pattes 198. Les pions 95 ont une section de forme rectangulaire à coins chanfreinés pour ne pas blesser les portions de fils de liaison entre deux bobinages 50 consécutifs. Comme visible dans cette Figure 4a les autres pions 95 sont implantés globalement sur la même circonférence et les extrémités de chaque bobinage 50 sont en contact avec les bords latéraux concernés de deux pions 95 consécutifs pour une liaison en continu des bobinages 50. Les bords longitudinaux inférieurs des pions 95 de guidage retiennent radialement le fil de liaison entre deux bobinages 50 consécutifs. Le montage a ainsi une bonne tenue malgré l'action de la force centrifuge. Bien entendu lorsque les bobinages 50 sont montés en série deux pions inférieurs 95 suffisent.

On appréciera que la solution précitée à pions 95 assure la continuité entre les différents bobinages 50, qui sont tous au même potentiel. Les bobinages 50 peuvent être réalisées à l'aide d'une aiguille centralement creuse pour passage du fil et qui se déplace circonférentiellement, axialement et radialement. Cette aiguille bascule pour passer d'un pion 95 à un autre. Bien entendu en variante on peut supprimer les pions 95 internes et fixer directement les extrémités des fils sur les pattes 198. Bien entendu en variante les bobinages 50 pourront être reliés entre eux comme dans le document WO 2007/003835.

La paroi 59 radiale de chaque flasque 55, 56 présente un rebord 75 annulaire s'étendant sur toute la périphérie externe de la paroi 59 radiale et s'étendant axialement en direction du centre du rotor 30. Ce rebord 75 annulaire présente une face en appui sur les faces d'extrémité radiale externe des pôles 44 de sorte que les casquettes 89 des éléments 81, 82 isolants sont prises en sandwich entre une face annulaire interne du rebord 75 et les chignons 51. Une telle configuration permet aux flasques 55, 56 de participer avec les casquettes 89 au maintien des chignons 51 malgré la force centrifuge provoquée par la rotation du rotor 30. Dans une variante, il serait également possible de faire appel uniquement au rebord 75 annulaire des flasques 55, 56 pour maintenir les chignons 51 en position. Dans ce cas les éléments 51, 52 isolants sont donc dépourvus de casquettes 89.

La face externe de la paroi 59 de chaque flasque 55, 56 porte des pales 70 formant un ventilateur. Chaque pale 70 s'étend axialement vers l'extérieur du rotor 30 depuis la face radiale externe du flasque 55, 56 associé. Avantageusement pour une meilleure évacuation de la chaleur, les pales 70 sont réalisées venues de matière avec le flasque 55, 56 associé. De préférence, les pales 70 sont agencées à la périphérie de la face radiale externe du flasque 55, 56 de façon dissymétrique par rapport à l'axe B de l'arbre 35 pour augmenter les performances de ventilation et réduire les bruits lorsque le rotor 30 tourne.

En variante, les pales 70 appartiennent à un ventilateur séparé du flasque 55, 56. L'utilisation de flasques 55, 56 et de ventilateurs séparés permet d'adapter facilement les ventilateurs en fonction de la puissance de la machine 10 ciblée. Le flasque 55, 56 et le ventilateur sont alors fixés entre eux au moyen d'un dispositif de fixation formé par exemple par des éléments de fixation associés aux flasques 55, 56 coopérant avec des orifices du ventilateur. Cette fixation pourra être réalisée à l'aide de vis comme à la Figure 16 du document US 6 784 586, en variante par rivetage ou soudage par points.

L'un au moins des flasques 55, 56 pourra être dépourvu de pales 70. En variante les deux flasques 55, 56 pourront être dépourvus de pales 70.

Chaque flasque 55, 56 comporte par ailleurs une première série d'orifices 72 traversants situés autour de l'ouverture 60 principale, ces orifices 72 présentant un angle d'ouverture au moins égal à l'angle entre deux pôles 44 saillants successifs. Ici, cette première série d'orifices 72 comporte quatre orifices 72 présentant le même angle d'ouverture. Bien entendu, cela dépend des applications. Les quatre orifices 72 du flasque 55 avant sont agencés de manière régulière autour de l'ouverture 60 principale. Ainsi les orifices 72 sont en regard au moins de la base (de la périphérie interne) d'un espace interbobinage séparant deux bobinages 50 successifs pour assurer une circulation de l'air à l'intérieur du rotor 30 entre les deux pôles 44 saillants concernés. Ces orifices 72 n'ont pas la même taille d'un flasque 55, 56 à l'autre pour créer une dissymétrie et réaliser un écoulement axial de l'air entre les deux bobinages 50. Plus précisément (Figures 6a et 6b) les orifices 72 du flasque 56 sont plus larges circonférentiellement et radialement que ceux des orifices 72 du flasque 55. Les orifices 72 du flasque 56 sont en vis-à-vis de deux espaces interbobinage complets séparant deux bobinages successifs 50, tandis que les orifices 72 du flasque 55 sont en vis à vis d'un espace complet entre deux bobinages 50 et d'une portion d'un autre espace. En variante les orifices 72 sont identiques.

Chaque flasque 55, 56 comporte en outre une deuxième série d'orifices 73 traversants, chaque orifice 73 de la deuxième série étant positionné entre deux pales 70 successives. Il est possible de ménager de tels orifices 73 dans toutes les zones séparant deux pales 70 successives ou uniquement dans certaines de ces zones en fonction du circuit de ventilation souhaité. Ces orifices 73 présentent un angle d'ouverture plus petit que l'angle d'ouverture des orifices 72 de la première série d'orifices 72. Ici, les deuxièmes séries d'orifices 73 comportent quatorze orifices 73 de taille inégale. Les orifices 73 sont implantés à l'extérieur des orifices 72 au niveau de la périphérie externe des bobinages 50. Ils donnent accès à au moins une partie des espaces, interbobinage qui séparent deux bobinages 50successifs. En variante il est prévu des lamages supplémentaires optionnels à l'image des lamages 68 d écrits ci-après. Ces lamages affectent radialement la périphérie externe de la paroi radiale 59 et axialement une partie du rebord 75. Ils pourront être implantés au niveau des espaces libres entre deux retours 45 successifs. Bien entendu on peut supprimer des orifices 73 et les remplacer par des lamages. Les orifices 73 peuvent être identiques ou différents d'un flasque 55, 56 à l'autre. On notera que certains orifices 73 sont en regard de la périphérie externe d'un chignon et que de l'air peut accéder aux espaces interbobinage du fait que les flasques sont creux. Il en est de même pour les extrémités circonférentielles des orifices 72.

Lorsque le rotor 30 tourne, les pales 70 et les deux séries d'orifices 72, 73 ainsi que les lamages permettent ainsi d'évacuer la chaleur emmagasinée notamment par circulation d'air à l'intérieur de la machine 10. Suivant le circuit de ventilation, l'air issu de l'extérieur du rotor 30 va pénétrer à l'intérieur du rotor 30 par les orifices 72, 73 d'un flasque 55, 56 pour s'écouler ensuite le long du rotor 30 à l'intérieur des espaces interbobinage entre deux pôles 44 successifs pour ensuite ressortir du côté opposé via les orifices 72, 73 du flasque 55, 56 opposé. Les flasques 55, 56 constituent via leur pales 70 des ventilateurs internes, les palier 14, 15, présentant de manière connue des entrées et des sorties d'air. Le nombre d'orifices 72, 73 et de lamages optionnels, leurs dimensions, le nombre de pales 70, ainsi que leur agencement, pourront être adaptés en fonction du circuit de ventilation souhaité tout en conservant la résistance mécanique des flasques.

La paroi 59 radiale de chaque flasque 55, 56 présente en outre sur sa face interne tournée vers le paquet 36 de tôles deux secteurs internes 79 s'étendant axialement vers le paquet 36 de tôles: Chaque secteur 79 est inséré dans une partie 91 évidée d'une paroi 85 radiale d'un élément 81, 82 isolant. Dans un exemple ces secteurs 79 sont constitués par deux portions diamétralement opposées d'un même anneau. Les secteurs 79 constituent des butées axiales pour l'âme du paquet 36 de tôles.

Le rebord 75 annulaire de chaque flasque 55, 56 comporte deux pions 77 de centrage destinés à coopérer avec des ouvertures 66 axiales ménagées dans les pôles 44 saillants. Les pions 77 permettent ainsi de faciliter le positionnement angulaire des flasques 55, 56 lors du montage.

Dans un mode de réalisation les flasques 55, 56 en matériau amagnétique sont réalisé en matière moulable, telle que de l'aluminium pour bien évacuer la chaleur ou en variante en matière plastique avantageusement renforcée par des fibres.

Les flasques 55, 56 sont fixés l'un à l'autre par des tirants 62 d'orientation axiale, qui sont ici au nombre de trois. A cet effet chaque flasque 55, 56 comporte trois orifices 65 destinés à permettre le passage de chaque tirant 62. Les tirants 62 traversent axialement, via les ouvertures 66 axiales ménagées dans les pôles, le paquet 36 de tôles depuis le flasque 55 avant jusqu'au flasque 56 arrière. Ces tirants 62 sont en matériau amagnétique, par exemple en Aluminium ou en inox.

La face radiale externe de chaque flasque 55, 56 comporte des lamages 68 pour loger les extrémités de chaque tirant 62. Ces lamages 68 autorisent le passage de l'air.

Selon une variante non représentée de l'invention, les flasques comportent d'autres moyens de refroidissement tels qu'au moins un caloduc implanté au niveau d'un retour 45, par exemple à la faveur d'un orifice 65 libre. L'arbre peut être un arbre conformé pour constituer un caloduc.

Selon un autre aspect de l'invention les orifices 65 de fixation du flasque 55 avant sont taraudés. Les tirants 62 comportent une extrémité filetée qui est vissée dans les orifices taraudés du flasque 55 avant lors du montage du rotor 30. En variante l'extrémité filetée du tirant 62 est autotaraudeuse en sorte que l'orifice 65 associé du flasque 55 est lisse. En variante, l'extrémité du tirant 62 est lisse et traverse l'orifice 65 associé du flasque 55, l'extrémité libre du tirant 62 étant écrasée au contact de la face externe du flasque 55 pour une fixation par rivetage. En variante, le tirant 62 est remplacé par une tige traversant les orifices 65 des flasques 55, 56 et du paquet 36 de tôles, les extrémités axiales de la tige étant écrasées au contact des faces externes des flasques 55, 56 pour une fixation par rivetage.

Le rotor 30 comporte un résolveur 100 permettant de connaître la position en rotation du rotor 30. Le résolveur 100 intervient notamment lorsque la machine 10 fonctionne en mode moteur (fonction démarreur), afin de pouvoir adapter convenablement la tension appliquée aux bobinages 50 du stator 12 en fonction de la position du rotor 30. Dans une variante de réalisation le résolveur 100 est remplacé par une cible magnétique associée à un ensemble de capteurs à effet hall porté par un porte capteur.

Plus précisément, le flasque arrière 56 est configuré pour porter un porte-cible qui est destiné à permettre à des capteurs associés de détecter la position angulaire du rotor 30. Les capteurs sont portés par un porte-capteurs dont la position est réglable circonférentiellement. La lecture de la cible est ici radiale. Le porte-cible avec sa cible et les capteurs solidaires d'un porte capteur appartiennent à des moyens de suivi de la rotation du rotor comme décrit dans le document WO01/69762 auquel on se reportera pour plus de précisions.

En variante l'alternateur n'est pas réversible et est donc dépourvu de résolveur 100 ou de cible magnétique

On décrit ci-après le montage du rotor 30. Les isolants 83 d'encoche sont chacun installés entre deux pôles 44 successifs. Ensuite, les éléments 81, 82 isolants sont fixés sur le paquet 36 de tôle par encliquetage (clipsage) via les deux dispositifs 98. Chaque face d'extrémité radiale externe de chaque pôle 44 est alors en contact direct avec un bras 88 d'un élément 81, 82 isolant.

Les bobinages 50 d'excitation sont ensuite enroulés autour de chaque pôle 44 recouvert d'isolants 83 d'encoche et des deux bras 88 des éléments 81, 82 isolants associés à ce pôle 44, les fils des bobinages 50 étant guidés et maintenus par les rainures des bras 88 et par les pions 95 de guidage des éléments 81, 82 isolants.

Le paquet 36 de tôles, les éléments 81, 82 isolants et les bobinages 50 d'excitation associés sont montés sur l'arbre 35 de rotor 30, par exemple par emmanchement à force. Puis les flasques 55, 56 sont agencés axialement de part et d'autre du paquet 36 de tôles de manière que les pions 95 de centrage entrent dans des ouvertures 66 axiales ménagées dans les pôles 44 saillants et que les secteurs 79 sont positionnés à l'intérieur des parties 91 évidées des parois 85 des éléments 81, 82 isolants. Le collecteur 101 est positionné sur l'arbre 35, entre le deuxième flasque 56 et le deuxième élément 82 isolant.

Les rebords 75 annulaires des flasques 55, 56 présentent alors une face en appui sur les faces d'extrémité radiale externe des pôles 44 de sorte que les casquettes 89 des éléments 81, 82 isolants sont prises en sandwich entre une face annulaire interne du rebord 75 et les chignons 51. Une telle configuration permet aux flasques 55, 56 de participer avec les casquettes 89 au maintien des chignons 51 malgré la force centrifuge provoquée par la rotation du rotor 30.

La tige filetée des tirants 62 est ensuite introduite axialement dans les orifices 65 de fixation du flasque 55 avant. Les tirants 62 sont ensuite vissés dans les orifices 65 de fixation taraudés du flasque 56 arrière jusqu'à ce que la tête de chaque tirant 62 soit en appui au fond du lamage 68 associé du flasque 55 avant. Ainsi les tirants 62 permettent d'enserrer axialement le paquet 36 de tôle et les éléments 81, 82 isolants entre les deux flasques 55, 56.

Puis une opération d'équilibrage des flasques 55, 56 est réalisée. Cette opération consiste par exemple dans le perçage de trous ou d'évidements dans la périphérie de la face externe de la paroi 59 radiale de chaque flasque 55, 56 de manière que le rotor 30 ne vibre pas lorsqu'il est entraîné en rotation. Grâce à l'invention l'opération d'équilibrage est facilitée grâce aux flasques 55, 56 permettant de réduire le nombre d'organes de fixation.

Le résolveur 101 est positionné autour de l'arbre 35, sur la face externe de la paroi 59 radiale du deuxième flasque 56.

Lors du fonctionnement d'un tel rotor 30, les bobinages 50 d'excitation ont tendance à s'échauffer compte tenu du courant qui les parcourt.

Les flasques 55, 56 tournent avec l'arbre 35 du rotor 30. Les pales 70 brassent ainsi de l'air et de l'air circule entre les deux flasques 55, 56 le long des espaces entre deux pôles adjacents grâce aux deux séries d'orifices 72, 73 de chaque flasque 55, 56. Les pales 70 et les orifices 72, 73 dissipent ainsi dans l'air la chaleur accumulée à l'intérieur du rotor 30. La chaleur est donc évacuée de manière efficace dans l'air environnant par l'intermédiaire des pales 70 et des orifices 72, 73. L'air environnant est renouvelé grâce au brassage et aux turbulences induits par les pales 70.

Ainsi qu'il ressort à l'évidence de la description et des dessins les paquets de tôles du stator 12 et du rotor 30 permettent de diminuer les pertes dues aux courants de Foucault. Les évidements de l'ouverture 38 de la Figure 7 permettent de diminuer les contraintes lors de l'emmanchement à force de l'arbre moleté dans l'orifice central de l'âme du paquet de tôles 36. La solution à pôles 44 d'un seul tenant avec l'âme centrale du paquet de tôles 36 est plus avantageuse qu'une solution à pôles rapportés car cette solution présente une meilleure tenue à la force centrifuge et permet de garantir un plus petit entrefer entre la périphérie externe du rotor 30 et la périphérie interne du corps du stator 12. Les modes de réalisations décrits ci-dessus permettent d'utiliser les collecteurs 101 des alternateurs conventionnels, par exemple du type de ceux décrits dans le document FR 2 710 197 et également les montages conventionnels des aimants de ces alternateurs.

Il ressort également à l'évidence de la description et des dessins que les flasques 55, 56, de forme creuse, présentent un rebord 75 constituant un élément de pression pour maintenir le paquet de tôles 36 et éviter une déformation, notamment une ouverture de celui-ci. Le paquet de tôle 36 est serré entre les flasques 55, 56. Les rebords 75, configurés pour venir en contact avec les retours 45, rigidifient les flasques 55, 56 et constituent via leur périphérie interne une buté radiale pour les casquettes 89 des éléments 81, 82. Ainsi sous l'action de la force centrifuge la périphérie externe des casquettes 89 est admise à coopérer avec la périphérie interne des rebords 75 des flasques 55, 56. Ces flasques 55, 56 constituent par l'intermédiaire de leur rebord 75 une butée axiale pour les aimants 105 implantés entre deux retours consécutifs 45. La forme creuse des flasques 55, 56 permet de loger les chignons 51, les éléments 81, 82 avec leurs casquettes 89 et une partie du collecteur 101. On appréciera que les secteurs interne 79 des flasques 55, 56 évitent une déformation de l'âme du paquet 36 en combinaison avec les parois 85 des éléments 81, 82.

Les éléments 81, 82 sont, de manière précitée, en matière électriquement isolante. Ils pourront être en matière plastique, telle que du PA 6.6. Ils sont plus épais et moins bon conducteur de chaleur que les isolant d'encoche 83.

Bien entendu en variante l'un au moins des éléments 81, 82 est dépourvu de rainures et l'isolant 83 peut être d'un seul tenant avec l'un des éléments 81, 82, par exemple par moulage. Dans encore une autre variante l'isolant 83 pourra être en deux parties chacune d'un seul tenant avec l'un des éléments 81, 82. L'isolant 83 pourra être donc en variante en PA 6.6 en étant moins épais et donc plus fin que les éléments 81, 82 pour mieux conduire la chaleur.

Bien entendu la présente invention n'est pas limitée aux exemples de réalisation décrits.

Ainsi il est possible de prévoir quatre tirants 62 à savoir un trou par tirant 62. En variante il est prévu deux tirants 62 diamétralement opposés et deux caloducs diamétralement opposés, chaque caloduc comportant une tige engagée dans au moins un trou d'un des flasques 55, 56 et au moins dans un tronçon des trous du paquet 36 de tôles et débouchant à l'extérieur du flasque 55, 56 concerné. Ces caloducs peuvent traverser complètement les flasques 55, 56 et le paquet 36 de tôles et être configurés à l'extérieur des flasques 55, 56 pour former des pales 70 de ventilateur. De tels caloducs sont décrits par exemple dans les figures 11A et 11B du document FR 2 855 673 auquel on se reportera. Les dispositions des figures 12, 13 et 24 de ce document sont également applicables.

Le nombre de pôles 44 dépend de manière précitée des applications. Ce nombre est égal à 12 dans les figures. En variante il peut être de 8 ou 10. Par rapport au document WO 2007/00385 on augmente dans tous les cas le nombre de bobinages 50 tout en ayant la possibilité d'augmenter le nombre d'aimants 105 à volonté pour augmenter la puissance de la machine 10 électrique tournante à pôles 44 saillants. Ainsi le nombre d'aimants 105 pourra être inférieur au nombre de pôles 44.

Bien entendu on peut remplacer les aimants 105 par des pièces amagnétiques pour avoir une continuité de matière à la périphérie externe du rotor 30. On peut réaliser de nombreuses combinaisons. Ainsi tous les espaces entre les retours 45 pourront être libres. En variante une partie de ces espaces entre les retours 45 pourront être libres et les autres occupés par des aimants 105 et/ou des pièces amagnétiques. En variante les aimants 105 pourront être de nuance différente. Par exemple certains des espaces entre deux retours 45 pourront être occupés par des aimants 105 en ferrite et une partie au moins des autres espaces pourront être occupés par des aimants 105 en terre rare.

En variante les flasques 55, 56 sont obtenus par moulage, ou forgeage ou par injection de matière plastique ou de métal.

En variante les pales 70 d'au moins un flasque 55, 56 sont supprimées. Les deux flasques 55, 56 sont en variante dépourvues de pales 70, notamment lorsque la machine 10 électrique tournante est refroidie par eau. Plus précisément en variante la partie intermédiaire du carter 11 comporte un canal pour circulation d'un liquide de refroidissement, tel que le liquide de refroidissement du moteur thermique et le corps du stator 12 est monté par frettage à l'intérieur de la partie intermédiaire.

Bien entendu lorsque les deux flasques 55, 56 ne portent pas de pales 70 on a plus de liberté pour implanter la deuxième série d'ouvertures 73, qui peuvent ainsi être plus larges circonférentiellement pour s'étendre de part et d'autre d'un bobinage 50.

Dans tous les cas au moins l'une des séries d'orifices 72, 73 et /ou de lamages est différente d'un flaque 55, 56 à l'autre.

Bien entendu en variante les séries d'orifices 72, 73 et/ou de lamages sont identiques d'un flasque 55, 56 à l'autre.

En variante le carter 11 comporte un palier avant et un palier arrière comme divulgué par exemple à la Figure 14 du document US 6 784 586 dans le document montrant une partie des balais et du pont redresseur de courant.

La machine 10 électrique tournante est en variante un alternateur dépourvu de résolveur 100 ou de tout autre moyen de suivi de la rotation du rotor 30.

En variante la machine 10 électrique tournante comporte une génératrice de courant inversé destinée à alimenter des bobines d'un rotor 30 comme décrit dans le document EP 0 331 559 ou FR 2918512 (Figures 15 et 16). Dans ce cas les casquettes 89 du rotor 30 peuvent coopérer avec une pièce fixée sur la périphérie externe des pôles des bobines, appelés également noyaux, la dite pièce étant fixé par exemple par des vis, comme visible dans les documents EP 0331 559 et FR 2 918 512. Cette pièce est saillante et recouvre alors les casquettes 89. La présence des flasques 55, 56 n'est donc pas obligatoire, la machine 10 électrique tournante étant en variante un ralentisseur électromagnétique.

Le refroidissement du rotor 30 est amélioré. En effet, l'invention augmente les performances aérauliques intrinsèques des flasques 55, 56 et permet une meilleure évacuation de la chaleur au niveau du rotor 30 par convection thermique. En outre, on diminue le bruit sonore de type aéraulique. Ce meilleur refroidissement du rotor 30 permet de maintenir les bobinages 50 du rotor 30 sur la plage de fonctionnement de 0 à 18000 tours par minute et d'augmenter le nombre de pôles 44 du rotor 30. En outre, on diminue le coût et le temps de fabrication du rotor 30 en minimisant l'opération d'imprégnation de vernis qui est longue et coûteuse. En effet on peut déposer des gouttes de vernis au niveau des chignons 51 pour avoir une meilleure cohésion des spires des bobinages 50, ainsi qu'une meilleur tenue à la force centrifuge. En variante les fils de liaison et les bobinages 50 pourront être recouverts d'une couche supplémentaire de liaison sous la forme d'un polymère d'imprégnation, qui par chauffage et polymérisation permet de lier entre elles les spires des bobinages 50 pour une meilleure tenue à la force centrifuge.

La quantité de vernis est réduite dans tous les cas. Ce vernis ou la couche de liaison assurent la cohésion des bobinages 50. Ils ne servent pas à la transmission de chaleur avec le paquet 36 de tôles et les flasques 55, 56.

En variante l'un des flasques 55, 56 en matériau amagnétique est en matière plastique et l'autre en aluminium, en laiton ou à base de magnésium. Le flasque en matière plastique est avantageusement en matière plastique renforcé par des fibres. La réalisation du flasque en matière plastique ou en aluminium permet d'obtenir aisément les pales par moulage. On peut réaliser l'équilibrage du flasque en matière plastique par apport de matière dans au moins une saillie axiale du flasque comme décrit dans le document DE 23 46 345 auquel on se reportera. L'équilibrage de l'un au moins des flasques est réalisé en variante par sertissage d'au moins une masse d'équilibrage dans l'un des évidements réalisés dans des saillies de ce flasque comme décrit dans le document DE 30 31 622 auquel on se reportera pour plus de précisions.

## Revendications

1. Rotor (30) de machine (10) électrique tournante comportant :
- un arbre (35) de rotor destiné à être monté rotatif autour de son axe (B),
- un paquet (36) de tôles monté coaxialement sur l'arbre (35) de rotor, ce paquet (36) de tôles comportant au moins deux pôles (44) saillants radialement,
- un bobinage (50) d'excitation enroulé autour de chaque pôle (44), de manière que des portions (51) d'extrémité axiale du bobinage, dîtes « chignons » font saillie axialement par rapport à chaque face d'extrémité radiale externe du paquet (36) de tôles,
- un premier et un deuxième flasque (55, 56) de maintien du paquet (36) de tôles et des chignons (51) des bobinages (50) agencés axialement de part et d'autre du paquet (36) de tôles,
- un dispositif (80) d'isolation de bobinages (50) d'excitation comportant :
- un premier élément (81) isolant positionné entre le premier flasque (55) et la première face d'extrémité radiale externe du paquet (36) de tôles,
- un deuxième élément (82) isolant positionné entre le deuxième flasque (56) et la deuxième face d'extrémité radiale externe du paquet (36) de tôles,
- le premier et deuxième élément (81, 82) isolant assurant l'isolation des chignons (51),
- au moins deux isolants (83) d'encoche, prenant la forme d'une membrane pliée, chaque isolant (83) d'encoche étant positionné sur les faces de deux pôles (44) saillants successifs en regard l'un de l'autre.

2. Rotor selon la revendication 1, **caractérisé en ce que** les éléments (81, 82) isolants comportent une paroi (85) radiale munie d'une ouverture (86) principale autorisant le passage de l'arbre (35).

3. Rotor selon la revendication 2, **caractérisé en ce que** les éléments (81, 82) isolants comportent au moins deux bras (88) agencés régulièrement autour du bord externe de la paroi radiale, ces bras (88) étant maintenus plaqués contre une face d'extrémité radiale d'un pôle (44) saillant par un chignon.

4. Rotor selon la revendication 3, **caractérisé en ce que** chaque bras (88) des éléments (81, 82) isolants comporte à son extrémité libre une casquette (89) s'étendant circonférentiellement de part et d'autre du bras (88), ces casquettes (89) étant positionnées entre chignon (51) et le rebord (75) annulaire d'un flasque (55, 56) solidaire du paquet de tôles (36).

5. Rotor selon l'une des revendications 1 à 4, **caractérisé en ce que** les éléments (81, 82) isolants comportent des pions (95) positionnés sur la face externe de la paroi (85) radiale des éléments (81, 82) isolant, ces pions (95) assurant via au moins une de leurs faces latérales le guidage des fils des bobinages (50).

6. Rotor selon l'une quelconque des revendications 1 à 5, **caractérisé en ce que** les éléments isolant (81, 82) comportent au moins deux dispositifs d'encliquetage (98) destinés à coopérer par encliquetage avec des ouvertures ménagées sur chaque face d'extrémité radiale du paquet (36) de tôles.

7. Rotor selon l'une quelconque des revendications 1 à 6, **caractérisé en ce que** les isolants (83) d'encoche sont plus minces que le premier et les deuxièmes éléments (81, 82) isolants.

8. Rotor selon l'une des revendications 1 à 7, **caractérisé en ce qu'**un au moins des éléments (81, 82) isolants est obtenu par surmoulage avec les isolants (83) d'encoche, de sorte que cet élément (81, 82) isolant et les isolants (83) d'encoche forment une seule pièce.

9. Rotor selon l'une des revendications 3 à 8, **caractérisé en ce que** les bras (88) des éléments (81, 82) isolants comportent des rainures assurant le maintien des spires des bobinages (50).

10. Rotor selon la revendication 9, **caractérisé en ce que** les rainures des bras (88) du premier élément (81) isolant sont inclinées.

11. Rotor selon l'une des revendications 1 à 10, **caractérisé en ce que** les isolants (83) d'encoche sont réalisés en matériau électriquement isolant et conducteur de chaleur, par exemple en matériau aramide de type dit Nomex (marque déposée).

12. Dispositif (80) d'isolation de bobinages (50) d'excitation d'un rotor (30) appartenant à une machine (10) électrique tournante selon l'une des revendications précédentes, **caractérisé en ce qu'**il comporte :
- un premier élément (81) isolant destiné à être positionné entre un premier flasque (55) et une première face d'extrémité radiale externe d'un paquet (36) de tôles du rotor (30),
- un deuxième élément (82) isolant destiné à être positionné entre un deuxième flasque (56) et une deuxième face d'extrémité radiale externe du paquet (36) de tôles,
- les éléments (81, 82) isolants assurant l'isolation de chignons (51) des bobinages (50), et
- au moins deux isolants (83) d'encoche, prenant la forme d'une membrane pliée, chaque isolant (83) d'encoche étant positionné sur des faces de deux pôles (44) saillants successifs du rotor (30) en regard l'un de l'autre.

## Patentansprüche

1. Rotor (30) einer drehenden elektrischen Maschine (10), der umfasst:
- eine Rotorwelle (35), die dazu bestimmt ist, drehbar um ihre Achse (B) montiert zu werden,
- ein Blechpaket (36), das koaxial zu der Welle (35) des Rotors montiert ist, wobei dieses Blechpaket (36) wenigstens zwei radial vorstehende Pole (44) aufweist,
- eine Erregungswicklung (50), die um jeden Pol (44) in der Weise gewickelt ist, dass axiale Endabschnitte (51) der Wicklung, die "Schaltenden" genannt werden, von jeder radialen äußeren Stirnfläche des Blechpakets (36) axial vorstehen,
- einen ersten und einen zweiten Flansch (55, 56) zum Halten des Blechpakets (36) und der Schaltenden (51) der Wicklungen (50), die axial beiderseits des Blechpakets (36) angeordnet sind,
- eine Vorrichtung (80) zum Isolieren der Erregungswicklungen (50), die Folgendes umfasst:
- ein erstes Isolierelement (81), das zwischen dem ersten Flansch (55) und der ersten äußeren radialen Stirnfläche des Blechpakets (36) positioniert ist,
- ein zweites Isolierelement (82), das zwischen dem zweiten Flansch (56) und der zweiten äußeren radialen Stirnfläche des Blechpakets (36) positioniert ist,
- wobei das erste und das zweite Isolierelement (81, 82) die Isolation der Schaltenden (51) gewährleisten, und
- wenigstens zwei Nut-Isolatoren (83), die die Form einer gefalteten Membran haben, wobei jeder Nut-Isolator (83) auf den Flächen von zwei aufeinander folgenden vorstehenden Polen (44), die einander gegenüberliegen, positioniert ist.

2. Rotor nach Anspruch 1, **dadurch gekennzeichnet, dass** die Isolierelemente (81, 82) eine radiale Wand (85) umfassen, die mit einer Hauptöffnung (86) versehen ist, die den Durchgang der Welle (35) zulässt.

3. Rotor nach Anspruch 2, **dadurch gekennzeichnet, dass** die Isolierelemente (81, 82) wenigstens zwei Arme (88) umfassen, die um den äußeren Rand der radialen Wand regelmäßig angeordnet sind, wobei diese Arme (88) so gehalten werden, dass sie gegen eine radiale Stirnfläche eines von einem Schaltende vorstehenden Pols (44) gedrückt werden.

4. Rotor nach Anspruch 3, **dadurch gekennzeichnet, dass** jeder Arm (88) der Isolierelemente (81, 82) an seinem freien Ende eine Kappe (89) aufweist, die sich in Umfangsrichtung beiderseits des Arms (88) erstreckt, wobei diese Kappen (89) zwischen dem Schaltende (51) und der ringförmigen Kante (75) eines mit dem Blechpaket (36) fest verbundenen Flansches (55, 56) positioniert sind.

5. Rotor nach einem der Ansprüche 1 bis 4, **dadurch gekennzeichnet, dass** die Isolierelemente (81, 82) Erhebungen (95) aufweisen, die auf der äußeren Fläche der radialen Wand (85) der Isolierelemente (81, 82) positioniert sind, wobei diese Erhebungen (95) über wenigstens eine ihrer Seitenflächen die Führung von Drähten der Wicklungen (50) gewährleisten.

6. Rotor nach einem der Ansprüche 1 bis 5, **dadurch gekennzeichnet, dass** die Isolierelemente (81, 82) wenigstens zwei Einrastvorrichtungen (98) umfassen, die dazu bestimmt sind, durch Einrasten mit Öffnungen zusammenzuwirken, die in jeder radialen Stirnfläche des Blechpakets (36) ausgebildet sind.

7. Rotor nach einem der Ansprüche 1 bis 6, **dadurch gekennzeichnet, dass** die Nut-Isolatoren (83) dünner als die ersten und zweiten Isolierelemente (81, 82) sind.

8. Rotor nach einem der Ansprüche 1 bis 7, **dadurch gekennzeichnet, dass** wenigstens eines der Isolierelemente (81, 82) durch Überformen mit den Nut-Isolatoren (83) erhalten wird, derart, dass dieses Isolierelement (81, 82) und die Nut-Isolatoren (83) ein einziges Teil bilden.

9. Rotor nach einem der Ansprüche 3 bis 8, **dadurch gekennzeichnet, dass** die Arme (88) der Isolierelemente (81, 82) Rillen aufweisen, die den Halt der Windungen der Wicklungen (50) gewährleisten.

10. Rotor nach Anspruch 9, **dadurch gekennzeichnet, dass** die Rillen der Arme (88) des ersten Isolierelements (81) geneigt sind.

11. Rotor nach einem der Ansprüche 1 bis 10, **dadurch gekennzeichnet, dass** die Nut-Isolatoren (83) aus einem elektrisch isolierenden und wärmeleitenden Material, beispielsweise einem Aramid-Material des sogenannten Nomex-Typs (eingetragene Marke), verwirklicht sind.

12. Vorrichtung (80) zum Isolieren von Erregungswicklungen (50) eines Rotors (30), der zu einer drehenden elektrischen Maschine (10) nach einem der vorhergehenden Ansprüche gehört, **dadurch gekennzeichnet, dass** sie Folgendes umfasst:
- ein erstes Isolierelement (81), das dazu bestimmt ist, zwischen einem ersten Flansch (55) und einer ersten äußeren radialen Stirnfläche eines Blechpakets (36) des Rotors (30) positioniert zu werden,
- ein zweites Isolierelement (82), das dazu bestimmt ist, zwischen einem zweiten Flansch (56) und einer zweiten äußeren radialen Stirnfläche des Blechpakets (36) positioniert zu werden,
- die Isolierelemente (81, 82), die die Isolation von Schaltenden (51) der Wicklungen (50) gewährleisten, und
- wenigstens zwei Nut-Isolatoren (83), die die Form einer gefalteten Membran annehmen, wobei jeder Nut-Isolator (83) an den Flächen von zwei aufeinander folgenden vorstehenden Polen (44) des Rotors (30), die einander gegenüberliegen, positioniert ist.

## Claims

1. Rotor (30) of a rotary electric machine (10) comprising:
- a rotor shaft (35) intended to be mounted such that it can rotate about its axis (B),
- a bundle of laminations (36) mounted coaxially on the rotor shaft (35), this bundle of laminations (36) comprising at least two radially salient poles (44),
- a excitation winding (50) wound around each pole (44), so that the axial end portions (51) of the winding, referred to as "winding overhangs" project axially from each external radial end face of the bundle of laminations (36),
- a first and a second end plate (55, 56) for keeping the bundle of laminations (36) and the winding overhangs (51) of the windings (50) arranged axially on each side of the bundle of laminations (36),
- a device (80) for insulating the excitation windings (50), comprising:
- a first insulating element (81) positioned between the first end plate (55) and the first external radial end face of the bundle of laminations (36),
- a second insulating element (82) positioned between the second end plate (56) and the second external radial end face of the bundle of laminations (36),
- the first and second insulating elements (81, 82) insulating the winding overhangs (51),
- at least two slot insulators (83), in the form of a pleated membrane, each slot insulator (83) being positioned on the faces of two successive salient poles (44) facing one another.

2. Rotor according to Claim 1, **characterized in that** the insulating elements (81, 82) have a radial wall (85) with a main opening (86) for the passage of the shaft (35).

3. Rotor according to Claim 2, **characterized in that** the insulating elements (81, 82) have at least two arms (88) arranged uniformly about the external edge of the radial wall, these arms (88) being held firmly against a radial end face of a salient pole (44) by a winding overhang.

4. Rotor according to Claim 3, **characterized in that** each arm (88) of the insulating elements (81, 82) comprises at its free end a cap (89) extending circumferentially on each side of the arm (88), these caps (89) being positioned between the winding overhang (51) and the annular rim (75) of an end plate (55, 56) secured to the bundle of laminations (36).

5. Rotor according to one of Claims 1 to 4, **characterized in that** the insulating elements (81, 82) comprise pegs (95) positioned on the external face of the radial wall (85) of the insulating elements (81, 82), these pegs (95) via at least one of the lateral faces thereof guiding the wires of the windings (50).

6. Rotor according to any one of Claims 1 to 5, **characterized in that** the insulating elements (81, 82) comprise at least two clip-fastening devices (98) intended to collaborate in clip-fastening with openings formed on each radial end face of the bundle of laminations (36).

7. Rotor according to any one of Claims 1 to 6, **characterized in that** the slot insulators (83) are thinner than the first and second insulating elements (81, 82).

8. Rotor according to one of Claims 1 to 7, **characterized in that** at least one of the insulating elements (81, 82) is obtained by overmoulding with the slot insulators (83) so that this insulating element (81, 82) and the slot insulators (83) form a single component.

9. Rotor according to one of Claims 3 to 8, **characterized in that** the arms (88) of the insulating elements (81, 82) have grooves for holding the turns of the windings (50).

10. Rotor according to Claim 9, **characterized in that** the grooves of the arms (88) of the first insulating element (81) are inclined.

11. Rotor according to one of Claims 1 to 10, **characterized in that** the slot insulators (83) are made of a thermally conductive and electrically insulating material, for example of an aramid material of the type known as Nomex (registered trade mark).

12. Device (80) for insulating the excitation windings (50) of a rotor (30) belonging to a rotary electric machine (10) according to one of the preceding claims, **characterized in that** it comprises:
- a first insulating element (81) intended to be positioned between a first end plate (55) and a first external radial end face of a bundle of laminations (36) of the rotor (30),
- a second insulating element (82) intended to be positioned between a second end plate (56) and a second external radial end face of the bundle of laminations (36),
- the insulating elements (81, 82) insulating the winding overhangs (51) of the windings (50), and
- at least two slot insulators (83), taking the form of a pleated membrane, each slot insulator (83) being positioned on faces of two successive salient poles (44) of the rotor (30) facing one another.
